# EUROPEAN PATENT SPECIFICATION

(11) **EP 0 945 076 B1**
(45) Date of publication and mention of the grant of the patent: **03.09.2003**
(21) Application number: 99200887.0
(22) Date of filing: 23.03.1999
(51) Int. Cl.: A23L 3/36, A23B 4/06

(54) **Method for freezing a food product and device for the realization of this method**
Gefrierverfahren für Nahrungsmittel und Gefriergeräte hierfür
Procédé de congélation d'aliments et appareil à cet effet

(30) Priority: 25.03.1998 BE 9800236
(43) Date of publication of application: 29.09.1999
(73) Proprietor: Wormgoor, Arend, 7478 AG Diepenheim (NL)
(72) Inventor: Wormgoor, Arend, 7478 AG Diepenheim (NL)
(74) Representative: Donné, Eddy

(56) References cited:
- BE-A- 1 000 657
- DE-C- 821 647
- DE-U- 9 417 488
- FR-A- 2 703 765
- GB-A- 1 205 608
- US-A- 1 928 755
- US-A- 2 007 572
- US-A- 3 074 246
- US-A- 3 220 856

## Description

This invention relates to a method for freezing, more particularly deep freezing, of a food product, as well as to a device for the realization of this method.

In particular, the invention is intended for freezing of food products which can be brought together in bulk to a single mass, more particularly, products which, in non-frozen condition, either are liquid or movable. In the latter case, viscous, paste-like or minced products or similar are intended which either are diluted or not. This may also be products consisting of pieces or chunks, either or not in a liquid substance.

In first instance, the invention is intended for freezing meat products, but, more in general, it may also be applied with other food products.

For the freezing of meat products, it is known that devices can be applied consisting of a series of plate-shaped cooling elements, whereby each cooling element is provided with a bottom part fixedly connected thereto and wall parts fixedly connected therewith, in such a manner that, by placing the plate-shaped cooling elements next to each other, cooling spaces are created between the plate-shaped cooling elements. The meat product to be frozen is provided in these cooling spaces by pouring it between the plate-shaped cooling elements.

In these devices, separate slice-shaped frozen portions are obtained after freezing.

A disadvantage of this known technique consists in that the further treatment of the frozen product is rather cumbersome, in the first place, as separate portions are obtained which, thus, require a separate further treatment. More particularly, each portion has to be packaged separately. Moreover, to this aim a relative large amount of wrapping material is necessary.

A similar procedure is known from DE 821.647, whereby also completely separate portions are obtained, with the same disadvantages as described heretofore.

From BE 1.000.657 and US 3.220.856, methods are known for forming frozen products, whereby the products are provided in a holder or package which holder or package is provided with indentations. During freezing, the holder or package is surrounded by a cooling fluid, whereby the indentations allow for the cold to penetrate rapidly into the entire product. Such techniques are only appropriate for small consumer-directed quantities and are not appropriate for larger quantities, as in this case the indentations have to be too large and an insufficient cooling effect at the deepest point of the indentations is obtained. Moreover, these known techniques do not allow for providing a packaging film previously in the holder, as the profiled bottom is not suited for that.

The invention aims at a method for freezing food products which is improved in respect to the existing techniques and is particularly suitable for freezing large quantities of food product.

More particularly, it aims at a method whereby a frozen product is obtained which is better suited for further treatment and for transport than this is the case with the known procedure.

In particular, it aims at a method whereby one or more of the aforementioned disadvantages are excluded.

To this aim, the invention provides in a method for freezing a food product, with the characteristic that it at least consists in providing the food product to be frozen in a container; providing plate-shaped cooling elements in the container, such before or after providing the food product; deep freezing of the food product; and the removal of the plate-shaped cooling elements; whereby cooling elements are applied which, during freezing, leave connections in the container between the different spaces present between the cooling elements, in such a manner that after the removal of the cooling elements, a single frozen whole is obtained, said plate-shaped cooling elements and said container thereby being movable in respect to each other.

The aforementioned connections preferably are realized by positioning the cooling elements during freezing up to a distance above the bottom of the container and/or by applying cooling elements which are less wide than the container, as a result of which connections are formed at the side edges.

By providing for that, according to the invention, a one-piece frozen whole is obtained, it is excluded that separate portions are formed and such portions consequently have to be treated separately, more particularly, have to be packed separately.

Furthermore, the invention has as an advantage that, on one hand, a whole is obtained but, on the other hand, it is still easy, for example, for an end user, to break away portions of the end product.

It is noted that, according to the invention, plate-shaped cooling elements are provided in the container, thus, elements not forming part of the container itself, as a result of which the procedure concerned is no longer comparable in any respect to the techniques described in the aforementioned BE 1.000.657 and US 3.220.856.

The invention also relates to a device for the realization of the aforementioned method, with the characteristic that it at least consists of a container and a series of plate-shaped cooling elements which can be provided in the container, whereby means are provided which, along one or more edges of the cooling elements, in the condition in which they are in the container, leave connections between the spaces present in between the cooling elements and whereby said cooling elements and said container are movable in respect to each other.

Preferably, the aforementioned means are formed by a mutual dimensioning of the container and the cooling elements, whereby this dimensioning is such that in the condition in which the cooling elements are provided in the container, a distance is present between one or more edges of the cooling elements and the wall of the container, either the bottom of the container, or the side walls of the container, or both.

With the intention of better showing the characteristics of the invention, hereafter, by way of example without any limitating character, a preferred form of embodiment is described, with reference to the accompanying drawings, wherein:
figure 1 schematically represents the known method for freezing meat;
figures 2 and 3 schematically in two steps represent the method of the present invention;
figure 4 schematically represents a cross-section according to line IV-IV in figure 2;
figure 5 represents a device according to the invention;
figures 6 and 7 represent views according to arrows F6 and F7 in figure 5;
figure 8 represents a cross-section according to lines VIII-VIII in figure 5;
figure 9 at another scale represents a cross-section according to lines IX-IX in figure 8;
figure 10 in a top view represents a practical form of embodiment of the device according to the invention;
figure 11 represents the device from figure 10 in side elevational view;
figure 12 represents a variant of the device of figure 11.

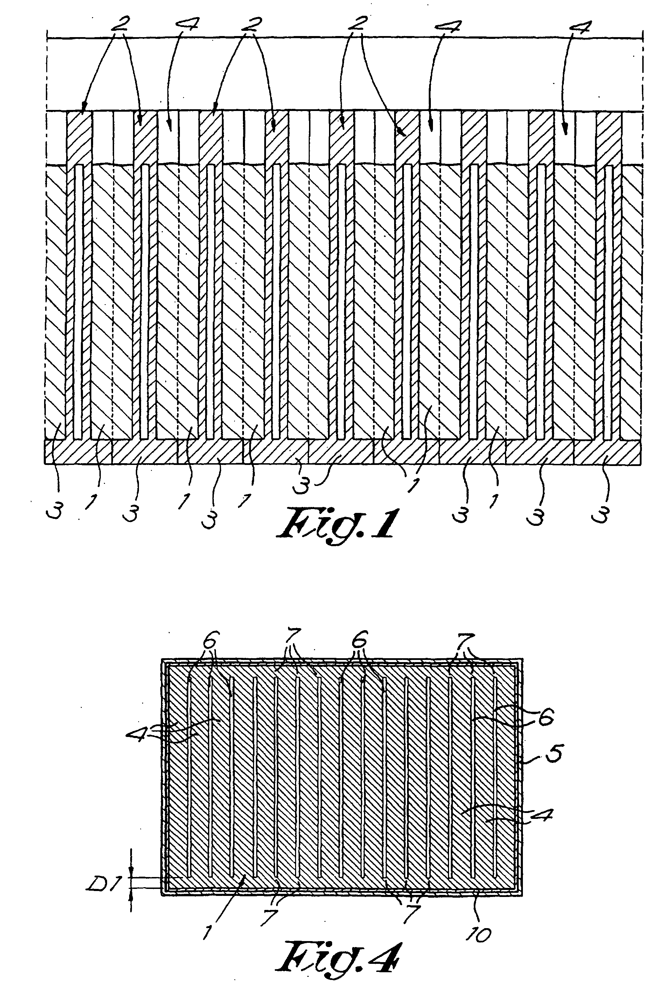

As represented in figure 1, it is known for freezing of food products 1, more particularly meat products, to apply devices which consist of a series of plate-shaped cooling elements 2, whereby each cooling element 2 is provided with a wall part 3 fixedly connected thereto, formed of a bottom portion and two side wall portions, in such a manner that, by positioning the cooling elements 2 adjacent to each other, cooling spaces 4 are created between the plate-shaped cooling elements 2. Hereby, the cooling elements 2 and the wall parts 3, so to say, form mould parts.

As represented, the food product 1 is provided between the cooling elements 2.

Once the food product 1 is deep frozen, it is removed from in between the cooling elements 2. It is clear that then separate portions are obtained, the dimensions of which are determined by the spaces 4 which are present between the different cooling elements 2.

It is also clear that the portions which are to be obtained show the disadvantage that the further treatment is complicated.

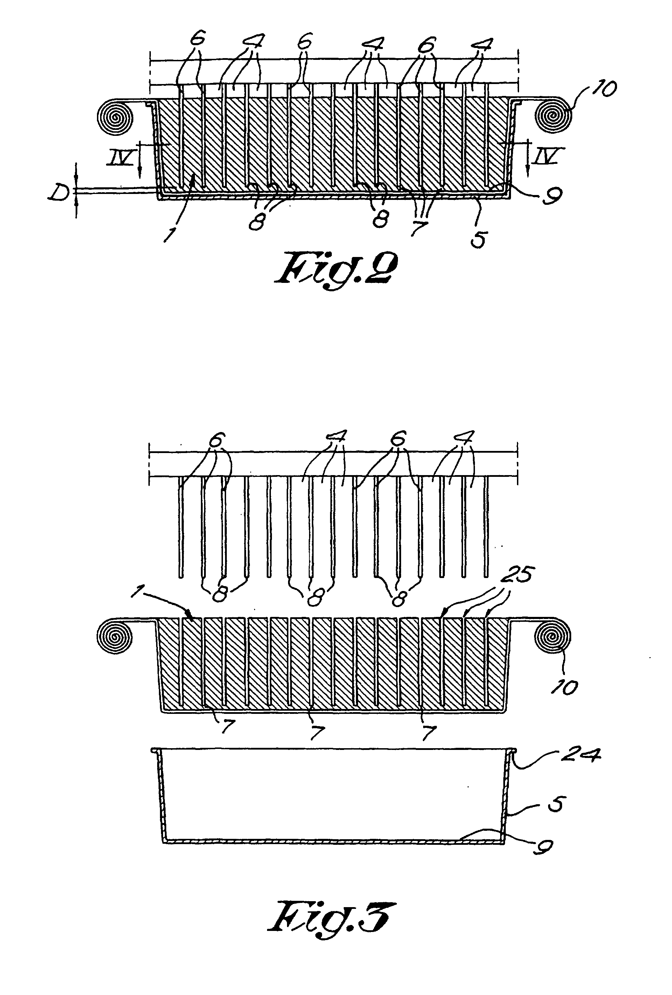

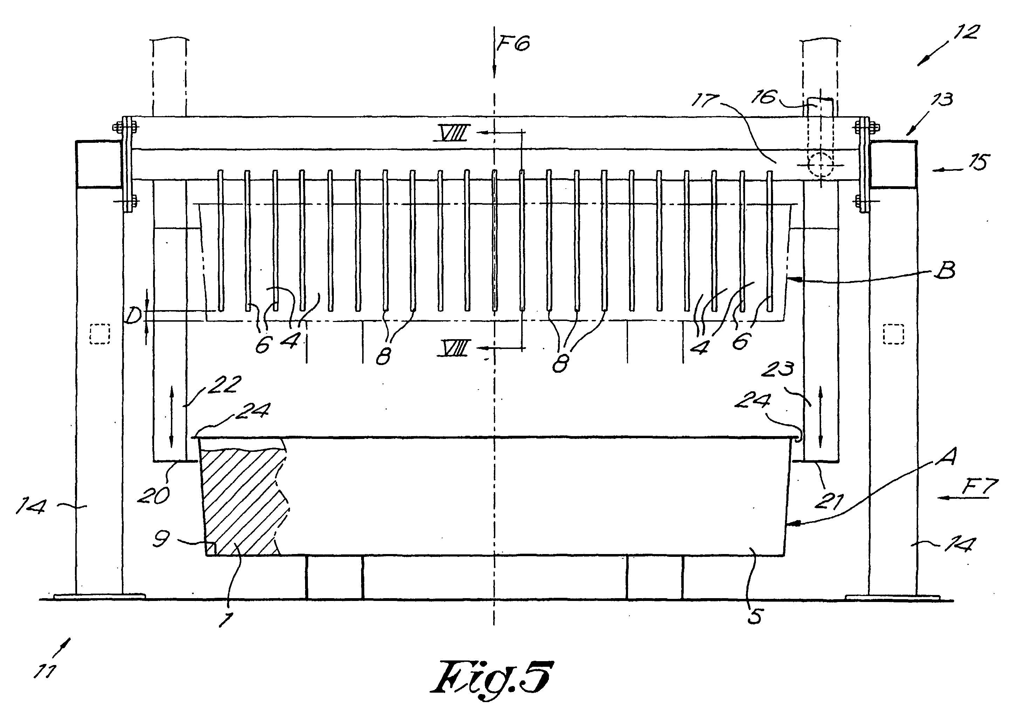

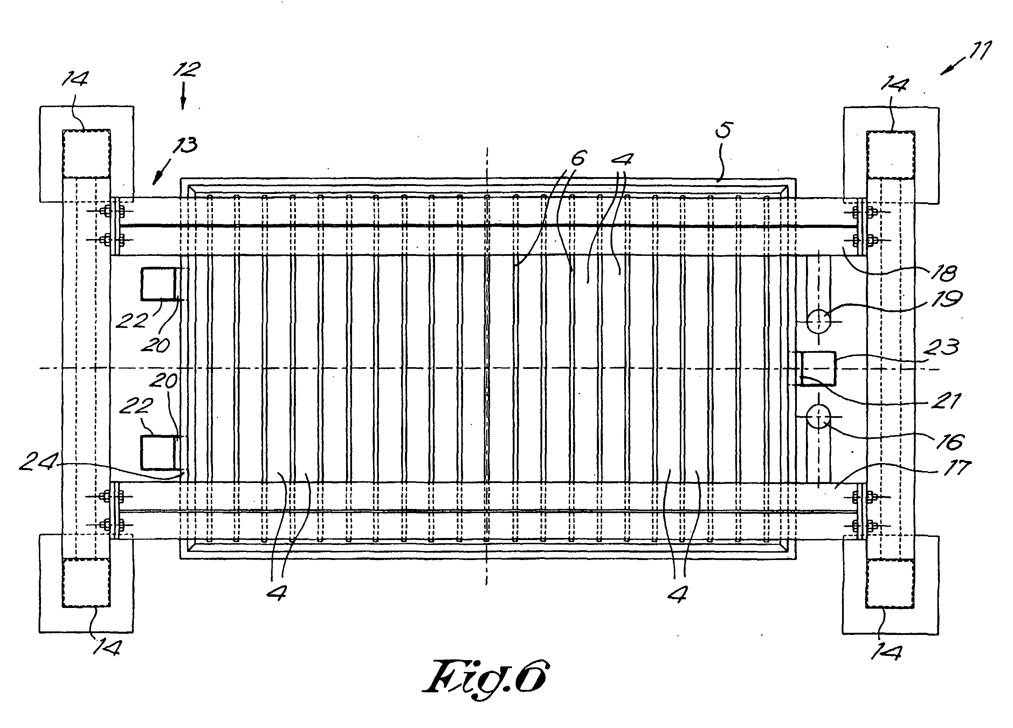

According to the present invention, this is remedied by making use, as represented in figure 2, of a container 5 and of cooling elements 6, more particularly plate-shaped cooling elements 6, which are provided in the container 5 in such a manner and/or are designed in such a manner that, during freezing, connections 7 are left between the different spaces 4 present between the cooling elements 6. As a result thereof, it is obtained that, after the food product 1 has been deep frozen, the cooling elements 6 have been removed from the food product 1 and the food product 1 has been removed from the container 5, as represented in figure 4, a one-piece frozen whole of food product 1 is obtained.

In the example of figure 2, the aforementioned connections 7 are realized by positioning the cooling elements 6 with their lower edge 8 at a distance D above the bottom 9 of the container 5 during freezing. The obtained frozen food product 1, thus, as visible in figure 3, consists of portions which in this case are not separated from each other but, at their bottom side, are connected to a whole by means of frozen food product 1.

According to the invention, the food product 1 subsequently is also packaged as a whole. According to figures 2 and 3, this is realized by providing, prior to the provision of the food product 1 in the container 5, a packaging film 10 or another packing means in the container 5 and taking the frozen food product 1 finally together with the packaging film 10 out of the container 5. It then suffices to wrap the packaging film 10 around the frozen food product 1, or to do something similar, and to close it.

It is clear that, in order to free the plate-shaped cooling elements 6 from the frozen food product 1, there may be provided in a known manner in a short-termed heating by means of the cooling elements 6.

Figure 4 shows that the aforementioned connections 7 can also be realized alongside the lateral edges of the cooling elements 6. In other words, this means that between the lateral edges of the cooling elements 6 and the side wall of the container 5, a free space D1 is kept of, for example, 1 to 3 cm.

It is clear that it is also possible to work exclusively with connections 7 at the location of the bottom, as well as with connections 7 which are exclusively situated at the side walls of the container 5.

It is noted that the connections 7 which are realized at the underside can be brought about in two manners. According to a first possibility, the cooling elements 6 are positioned at a well-defined distance D above the bottom 9, as it has already been described heretofore. According to another possibility, these connections 7 are realized by first providing the food product in the container 5 and subsequently lowering the cooling elements 6 into it. In this manner, always a thin film of food product will remain present between the bottom edge of the cooling elements 6 and the bottom 9, which, after freezing, forms the intended connection 7. It is noted that during the freezing process, the cooling elements 6 are automatically pushed upward by the food product 1, as a result of which at the place where originally only a thin film of food product 1 has been present, a thicker connection is formed automatically.

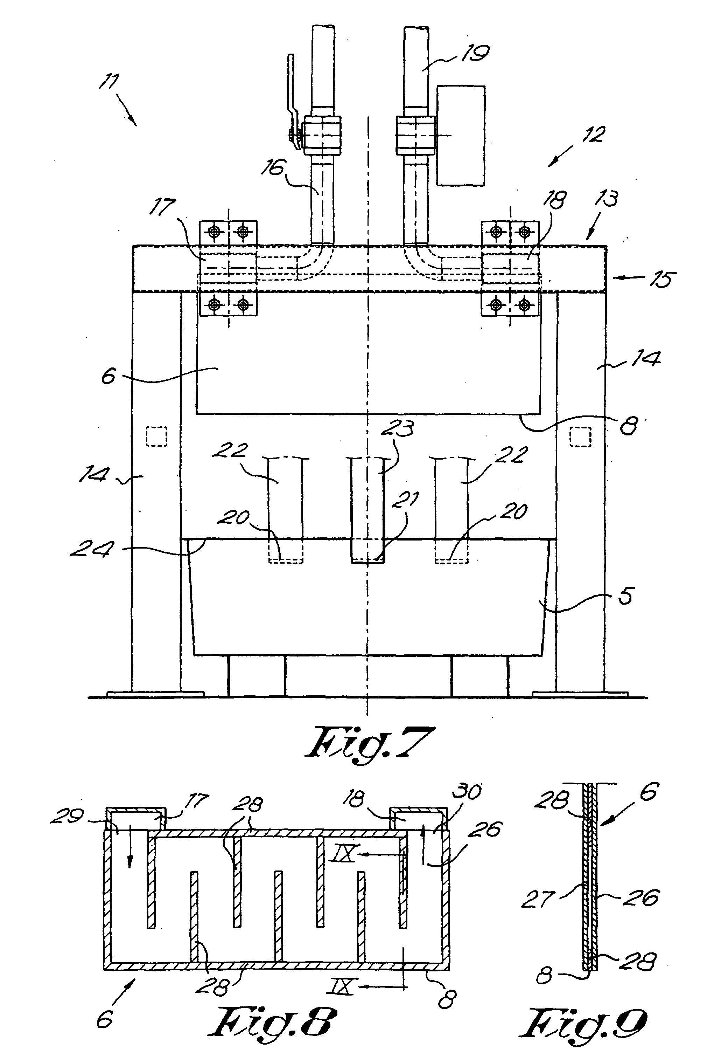

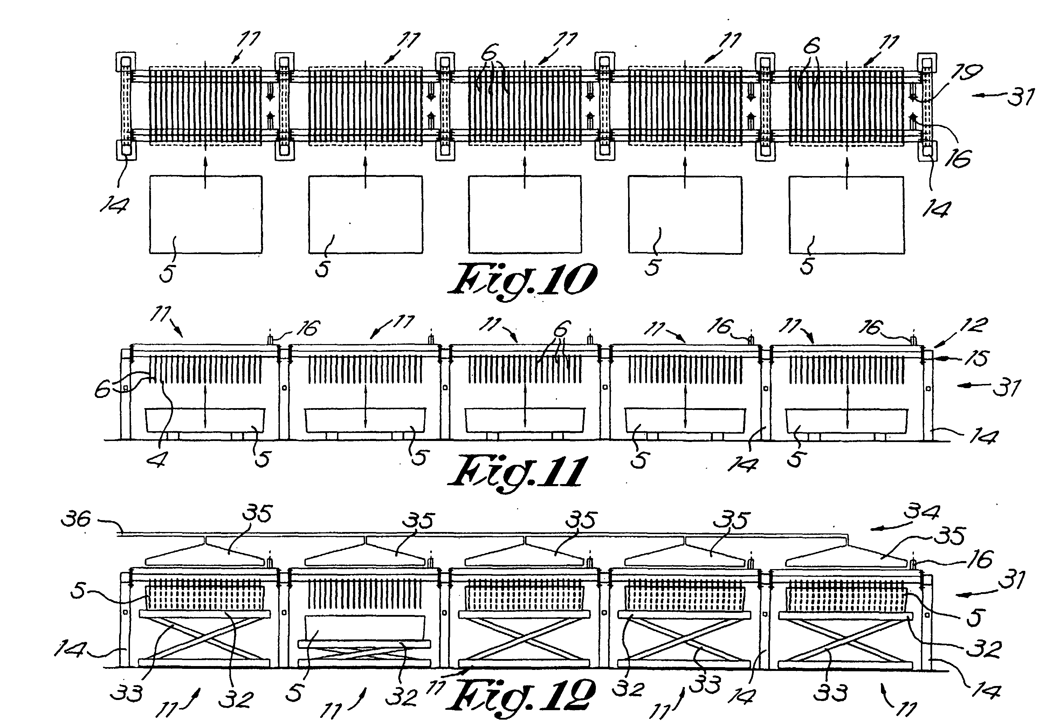

In figures 5 to 7, a practical form of embodiment of a device 11 according to the invention is represented in a somewhat schematized manner.

Besides the already mentioned container 5 and the plate-shaped cooling elements 6, the device 11 comprises means which provide for that the cooling elements 6, in the condition in which they are in the container 5, are situated with their lower edge 8 at a distance above the bottom 9 of the container 4 and/or are situated with their lateral edges at a distance from the lateral walls of the container 5. These means consist of a construction 12 which allows a mutual vertical displacement of the container 5 and the plate-shaped cooling elements 6 between, on one hand, a position whereby the cooling elements 6 are situated above and completely outside the container 5 and, on the other hand, a position whereby the cooling elements 9 are situated substantially within the container 5 but, as aforementioned, with their lower edge 8 at a distance D above the bottom 9 of the container 5.

The lateral distance is obtained in that the cooling elements 6, in the width of the container 5, are dimensioned distinctly smaller than the width of the container 5 itself, as already explained in the aforegoing with reference to figure 4.

The construction 12 is constructed of a frame 13 which is composed of feet 14 and a superstructure 15 carried thereof, at which the plate-shaped cooling elements 6 are suspended. The cooling elements 6 are supplied with cooling liquid by means of a circulation circuit with supply conduits 16-17 and return conduits 18-19, whereby the conduits 17 and 18 thereof form constructive parts of the superstructure 15.

Furthermore, the construction 12 comprises conduits 20-21 for the positioning of the container 5, in such a manner that the latter can be placed precisely under the cooling elements 6.

Finally, the construction 12 comprises a displacement mechanism in order to provide for the actual mutual displacement between the container 5 and the cooling elements 6. This displacement mechanism consists of supports 22 and 23 which, in the represented example, cooperate with the guides 20 and 21. These supports 22 and 23 can be moved up and down by means of not represented driving means. Hereby, the guides 20 and 21 engage under the edge 24 of the container 5, as a result of which this latter can be moved along up and down.

The functioning of the device 11 of figures 5 to 7 is as follows. First, a container 5, filled with food product 1, is provided under the cooling elements 6. This either can take place by placing a filled container 5 between the guides 20 and 21, for example, by means of a fork lift truck, or by filling the container 5 on site with food product 1.

Subsequently, the filled container 5 is moved upward, from the lowest position A, up to position B where the lower edge 8 of the cooling elements 6 is situated at a distance D above the bottom 9. This is obtained by moving the supports 22-23 upward, as a result of which the container 5 is gripped under its edge 24 by means of the guides 20-21 and is drawn along upward.

By subsequently feeding cooling liquid through the cooling elements 6, the food product 1 is deep frozen to a single frozen block.

Finally, this block is freed from the cooling elements 6 and taken out of the container 5. Hereby, when the container 5 still is in position B, a heating liquid is sent through the cooling elements 6, as a result of which these latter, at their surface, are freed from the frozen food product 1. Subsequently, the container 5, together with the frozen food product 1 present therein, again is brought into position A, after which this food product 1 can be taken out of the container 5 as a whole, for example, by tilting the container 5.

It is clear that, as described beforehand by means of figures 3 and 4, in this case, too, for packaging can be worked with a packaging film 10 previously provided in the container 5.

It is also clear that the mutual displacement between the cooling elements 6, the container 6 and the frozen food product 1 can also be realized in another manner.

According to a not represented variant, for example, instead of the container 5 the cooling elements 6 can be moved up and down.

According to still another possibility, the container 5 is removed after freezing, whereas the frozen block remains suspended at the cooling elements 6, eventually together with the packaging film 10. After the removal of the container 5, a support can be placed under the frozen block, after which this block can be detached.

According to an important aspect of the invention, use is made of thin plate-shaped cooling elements 6, preferably with a thickness of less than 12 mm, and still better maximum 9 mm, contrary to the relatively thick cooling elements 2 which are applied up to now. In combination with the method of the present invention, this offers the advantage that the lost spaces 25 indicated in figure 3 are limited to a minimum.

Figures 8 and 9 show that the plate-shaped cooling elements 6 according to the invention preferably are composed of two plates 26-27 with strip-shaped elements 28 in between them which function as spacers and simultaneously provide for the lateral sealing. Moreover, these elements 28 are provided in such a manner that a serpentine-shaped canalisation is obtained which extends between an inlet 29 and an outlet 30. Preferably, hereby plates 26-27 and elements 28 of stainless steel with a thickness of 3 mm are used.

The strip-shaped elements 28 allow that the whole can be welded together in a particularly strong manner. As a result thereof, high pressures, up to 5000 kg/cm², can be applied when circulating the cooling liquid. This, in its turn, allows for large circulation speeds, even if, in accordance with the invention, very thin cooling elements with small passages are applied, as a result of which a quick cooling remains possible.

As represented in figures 10 and 11, the device 11 described in the aforegoing can form a part of a larger installation 31 whereby several devices 11 are placed in series next to each other.

Figure 12 represents a variant whereby each of the containers 5 is provided on a lifting platform 32 which, by means of scissors 33, can be moved up and down. The installation 31 of figure 12 also is equipped with a supply system 34 for the food product 1, with nozzles 35 which are provided above the cooling elements 6 and the container 5, in such a manner that the food product 1 can be supplied from above. Hereby, first the containers 5 are moved upward until the cooling elements 6 are situated therein and subsequently food product 1 is fed into containers 5 by supplying it between the cooling elements 6 at the top. It is clear that the supply system 34 is only suitable in the case that the food product 1 is sufficiently movable, more particularly viscous, liquid or similar, in order to be supplied through a conduit 36.

The present invention is in no way limited to the forms of embodiment described by way of example and represented in the figures, on the contrary may such method and device for freezing a food product 1 be realized according to various variants without leaving the scope of the invention.

## Claims

1. Method for freezing a food product, **characterized in that** it at least consists in providing the food product (1) to be frozen in a container (5); providing plate-shaped cooling elements (6) in the container (5), such before or after providing the food product; deep freezing of the food product (1); and the removal of the plate-shaped cooling elements (6); whereby cooling elements (6) are applied which, during freezing, leave connections (7) in the container (5) between the different spaces (4) present between the cooling elements (6), in such a manner that after the removal of the cooling elements (6), a single frozen whole is obtained, said plate-shaped cooling elements (6) and said container (5) thereby being movable in respect to each other.

2. Method according to claim 1, **characterized in that** during freezing, the cooling elements (6) are positioned at a distance above the bottom (9) of the container (5).

3. Method according to claim 1 or 2, **characterized in that** between the spaces (4) present between the cooling elements (6), connections (7) are left alongside the lateral edges of the cooling elements (6).

4. Method according to claim 1, 2 or 3, **characterized in that** the food product (1), in frozen condition, is packed as a whole.

5. Method according to claim 4, **characterized in that** the food product (1) is packed by providing, prior to the provision of the food product (1) in the container (5), a packaging film (10) or similar in the container (5), whereby this packaging film (10) or similar is closed around the obtained frozen whole after the food product (1) has been frozen.

6. Method according to any of the preceding claims, **characterized in that**, in order to remove the plate-shaped cooling elements (6) from the frozen food product (1), more particularly, to free these cooling elements (6) therefrom, it is provided in a short-term heating by means of the cooling elements (6), in such a manner that a thawing takes place at the surface of the cooling elements (6).

7. Method according to any of the preceding claims, **characterized in that** cooling elements (6) are applied with a thickness which is smaller than 12 mm, and still better is maximum 9 mm.

8. Method according to any of the preceding claims, **characterized in that** cooling elements (6) are applied which consist of two plates (26-27) with strip-shaped elements (28) provided in between which, amongst others, provide for the lateral sealing and which define a flow circuit, preferably in the form of a serpentine.

9. Method according to any of the preceding claims, **characterized in that** the cooling elements (6) are provided in between the food product (1) by first providing this food product (1) in the container (5) and subsequently providing for that, by a mutual vertical movement of the cooling elements (6) and the container (5), the cooling elements (6) penetrate into the food product (1).

10. Method according to any of the claims 1 to 8, **characterized in that** the cooling elements (6) are provided in between the food product (1) by bringing the cooling elements (6) into the container (5) and subsequently filling the container (5) with the aforementioned food product (1).

11. Method according to any of the preceding claims, **characterized in that** the food product (1) is a meat product.

12. Device for the realization of the method according to any of the preceding claims, **characterized in that** it at least consists of a container (5) and a series of plate-shaped cooling elements (6) which can be provided in the container (5), whereby means are provided which, along the edges of the cooling elements (6), in the condition in which they are in the container (5), allow for connections remaining between the spaces present in between the cooling elements (6) and whereby said cooling elements (6) and said container (5) are movable in respect to each other.

13. Device according to claim 12, **characterized in that** the aforementioned means are formed by a mutual dimensioning of the container (5) and the cooling elements (6), whereby this dimensioning is such that in the condition in which the cooling elements (6) are provided in the container (5), a distance is present between one or more edges of the cooling elements (6) and the wall of the container (5), either the bottom (9) of the container (5), or the side walls of the container (5), or both.

## Patentansprüche

1. Gefrierverfahren für Nahrungsmittel, **dadurch gekennzeichnet, dass** es mindestens daraus besteht, dass die zu gefrierenden Nahrungsmittel (1) in einem Container (5) bereitgestellt werden; plattenförmige Kühlelemente (6) in dem Container (5) vor bzw. nach dem Bereitstellen des Nahrungsmittels vorgesehen sind; das Nahrungsmittel (1) tiefgefroren wird; wobei Kühlelemente (6) angewendet werden, die während des Gefrierens Verbindungen (7) in dem Container (5) zwischen den verschiedenen zwischen den Kühlelementen (6) vorhandenen Räumen (4) zurücklassen, so dass man nach dem Entfernen der Kühlelemente (6) ein einziges gefrorenes Ganzes erhält, wobei die erwähnten plattenförmigen Kühlelemente (6) und der erwähnte Container (5) zueinander verschiebbar sind.

2. Verfahren gemäß Anspruch 1, **dadurch gekennzeichnet, dass** während des Gefrierens die Kühlelemente (6) in einer Entfernung über dem Boden (9) des Containers (5) positioniert sind.

3. Verfahren gemäß Anspruch 1 oder 2, **dadurch gekennzeichnet, dass** zwischen den Räumen (4) zwischen den Kühlelementen (6) Verbindungen (7) entlang den lateralen Kanten der Kühlelemente (6) gelassen werden.

4. Verfahren gemäß Anspruch 1, 2 oder 3, **dadurch gekennzeichnet, dass** das Nahrungsmittel (1) in gefrorenem Zustand als Ganzes verpackt wird.

5. Verfahren gemäß Anspruch 4, **dadurch gekennzeichnet, .dass** das Nahrungsmittel (1) verpackt wird, indem vor der Bereitstellung des Nahrungsmittels (1) in dem Container (5) eine Verpackungsfolie (10) oder ähnliches in dem Container (5) zur Verfügung gestellt wird, wobei diese Verpackungsfolie (10) oder ähnliches um das erhaltene gefrorene Ganze geschlossen wird, nachdem das Nahrungsmittel (1) gefroren wurde.

6. Verfahren gemäß einem der vorgenannten Ansprüche, **dadurch gekennzeichnet, dass** zum Entfernen der plattenförmigen Kühlelemente (6) von dem gefrorenen Nahrungsmittel (1), insbesondere zum Befreien dieser Kühlelemente (6) davon, eine kurzfristige Erwärmung mittels der Kühlelemente (6) vorgesehen ist, so dass an der Oberfläche der Kühlelemente (6) ein Tauen erfolgt.

7. Verfahren gemäß einem der vorgenannten Ansprüche, **dadurch gekennzeichnet, dass** die Kühlelemente (6) in einer Dicke angewendet werden, die kleiner als 12 mm und besser maximal 9 mm beträgt.

8. Verfahren gemäß einem der vorgenannten Ansprüche, **dadurch gekennzeichnet, dass** Kühlelemente (6) angewendet werden, die aus zwei Platten (26-27) mit dazwischen streifenförmigen Elementen (28) bestehen, die unter anderem für die laterale Abdichtung sorgen und die für einen Flusskreislauf sorgen, der vorzugsweise serpentinenförmig verläuft.

9. Verfahren gemäß einem der vorgenannten Ansprüche, **dadurch gekennzeichnet, dass** die Kühlelemente (6) zwischen dem Nahrungsmittel (1) vorgesehen werden, indem erst dieses Nahrungsmittel (1) in den Container (5) gebracht werden und anschließend dafür sorgen, dass durch eine gegenseitige senkrechte Bewegung der Kühlelemente (6) und des Containers (5) die Kühlelemente (6) in das Nahrungsmittel (1) eindringen.

10. Verfahren gemäß einem der Ansprüche 1 bis 8, **dadurch gekennzeichnet, dass** die Kühlelemente (6) zwischen dem Nahrungsmittel (1) bereitgestellt werden, indem die Kühlelemente (6) in den Container (5) gebracht werden und anschließend der Container (5) mit den zuvor genannten Nahrungsmittel (1) gefüllt wird.

11. Verfahren gemäß einem der vorgenannten Ansprüche, **dadurch gekennzeichnet, dass** das Nahrungsmittel (1) ein Fleischerzeugnis ist.

12. Gefriergerät für die Verwirklichung des Verfahrens gemäß einem der vorgenannten Ansprüche, **dadurch gekennzeichnet, dass** es mindestens zusammengesetzt ist aus einem Container (5) und einer Reihe plattenförmiger Elemente (6), die in dem Container (5) bereitgestellt werden können, wobei Mittel vorgesehen sind, die entlang der Kanten der Kühlelemente (6) in dem Zustand in dem sie in dem Container (5) sind, es ermöglichen, dass Verbindungen zwischen den zwischen den Kühlelementen (6) vorhandenen Räumen bleiben und wobei die erwähnten Kühlelemente (6) und der erwähnte Container (5) zueinander verschiebbar sind.

13. Gefriergerät gemäß Anspruch 12, **dadurch gekennzeichnet, dass** die zuvor genannten Mittel durch eine gegenseitige Bemaßung des Containers (5) und den Kühlelementen (6) gebildet werden, wobei diese Bemaßung so ist, dass in dem Zustand, in dem die Kühlelemente (6) in dem Container (5) bereitgestellt werden, ein Abstand zwischen einer oder mehreren Kanten der Kühlelemente (6) und der Wand des Containers (5) vorhanden ist, entweder des Bodens (9) des Containers (5) oder der Seitenwände des Containers (5) oder beiden.

## Revendications

1. Procédé pour congeler un produit alimentaire, **caractérisé en ce qu'**il consiste au moins : à placer le produit alimentaire (1) qui doit être congelé dans un récipient (5) ; à placer des éléments de refroidissement (6) en forme de plaques dans le récipient (5), avant ou après le placement du produit alimentaire ; à surgeler le produit alimentaire (1) ; et à retirer les éléments de refroidissement (6) en forme de plaques ; procédé par lequel on applique des éléments de refroidissement (6) qui, au cours de la congélation, laissent subsister des connexions (7) dans le récipient (5) entre les différents espaces (4) présents entre les éléments de refroidissement (6), de telle sorte qu'après le retrait des éléments de refroidissement (6), on obtient une entité congelée, lesdits éléments de refroidissement (6) en forme de plaques et ledit récipient (5) étant en l'occurrence mobiles l'un par rapport à l'autre.

2. Procédé selon la revendication 1, **caractérisé en ce que**, au cours de la congélation, les éléments de refroidissement (6) sont disposés à une certaine distance par rapport au fond (9) du récipient (5).

3. Procédé selon la revendication 1 ou 2, **caractérisé en ce que**, entre les espaces (4) présents entre les éléments de refroidissement (6), des connexions (7) subsistent le long des bords latéraux des éléments de refroidissement (6).

4. Procédé selon la revendication 1, 2 ou 3, **caractérisé en ce que** le produit alimentaire (1), à l'état congelé, est conditionné sous forme d'un tout.

5. Procédé selon la revendication 4, **caractérisé en ce que** le produit alimentaire (1) est conditionné en plaçant, avant de placer le produit alimentaire (1) dans le récipient (5), un film d'emballage (10) ou similaire dans le récipient (5), ce film d'emballage (10) ou similaire étant fermé autour de l'entité congelée que l'on obtient après avoir congelé le produit alimentaire (1).

6. Procédé selon l'une quelconque des revendications précédentes, **caractérisé en ce que**, pour retirer les éléments de refroidissement (6) en forme de plaques du produit alimentaire congelé (1), plus particulièrement, pour en libérer ces éléments de refroidissement (6), on prévoit un chauffage à court terme au moyen des éléments de refroidissement (6), de telle sorte qu'un dégel a lieu à la surface des éléments de refroidissement (6).

7. Procédé selon l'une quelconque des revendications précédentes, **caractérisé en ce qu'**on applique les éléments de refroidissement (6) avec une épaisseur qui est inférieure à 12 mm, encore mieux avec une épaisseur maximale de 9 mm.

8. Procédé selon l'une quelconque des revendications précédentes, **caractérisé en ce qu'**on applique des éléments de refroidissement (6) qui sont constitués par deux plaques (26-27), des éléments (28) en forme de bandes étant prévus entre les premiers cités, qui, entre autres, permettent d'obtenir une étanchéisation latérale et qui définissent un circuit d'écoulement, de préférence sous la forme d'un serpentin.

9. Procédé selon l'une quelconque des revendications précédentes, **caractérisé en ce que** les éléments de refroidissement (6) sont prévus à l'intérieur du produit alimentaire (1), en plaçant d'abord ce produit alimentaire (1) dans le récipient (5) et en faisant ensuite en sorte, via un mouvement vertical réciproque des éléments de refroidissement (6) et du récipient (5), que les éléments de refroidissement (6) pénètrent dans le produit alimentaire (1).

10. Procédé selon l'une quelconque des revendications 1 à 8, **caractérisé en ce que** les éléments de refroidissement (6) sont prévus à l'intérieur du produit alimentaire (1) en amenant les éléments de refroidissement (6) dans le récipient (5) et en remplissant par la suite le récipient (5) avec le produit alimentaire susmentionné (1).

11. Procédé selon l'une quelconque des revendications précédent, **caractérisé en ce que** le produit alimentaire (1) est un produit de viande.

12. Dispositif pour la mise en oeuvre du procédé selon l'une quelconque des revendications précédentes, **caractérisé en ce qu'**il est constitué au moins par un récipient (5) et par une série d'éléments de refroidissement (6) en forme de plaques qui peuvent être placés dans le récipient (5), des moyens étant prévus qui, le long des bords des éléments de refroidissement (6), à l'état dans lequel ils sont placés dans le récipient (5), permettent de laisser subsister des connexions entre les espaces présents entre les éléments de refroidissement (6), et le dispositif par lequel lesdits éléments de refroidissement (6) et ledit récipient (5) sont mobiles l'un par rapport à l'autre.

13. Dispositif selon la revendication 12, **caractérisé en ce que** les moyens susmentionnés sont formés à l'aide d'un dimensionnement réciproque du récipient (5) et des éléments de refroidissement (6), ce dimensionnement étant tel qu'à l'état dans lequel les éléments de refroidissement (6) sont placés dans le récipient (5), une distance est présente entre un ou plusieurs bords des éléments de refroidissement (6) et la paroi du récipient (5), que ce soit le fond (9) du récipient (5) ou les parois latérales du récipient (5), ou encore les deux.
